Europäisches Patentamt

(19) European Patent Office

Office européen des brevets

(11) **EP 0 557 892 B1**

(12) # EUROPEAN PATENT SPECIFICATION

(45) Date of publication and mention
of the grant of the patent:
**15.05.1996 Bulletin 1996/20**

(51) Int. Cl.$^6$: **B61F 3/04**, B61F 3/12,
B61F 3/16, B61D 13/00,
B60L 11/18, B61F 5/38,
B61F 5/44, B61F 5/52

(21) Application number: **93102561.3**

(22) Date of filing: **18.02.1993**

(54) **A motorized bogie for a rail vehicle**

Motorisiertes Drehgestell für ein Eisenbahnfahrzeug

Bogie motorisé pour un véhicule ferroviaire

(84) Designated Contracting States:
**AT CH FR GB IT LI**

(30) Priority: **24.02.1992 IT TO920143**

(43) Date of publication of application:
**01.09.1993 Bulletin 1993/35**

(73) Proprietor: **FIAT FERROVIARIA S.p.A.**
**I-10138 Torino (IT)**

(72) Inventor: **Losa, Pierantonio**
**I-10044 Pianezza (IT)**

(74) Representative: **Jorio, Paolo et al**
**Studio Torta,**
**Via Viotti, 9**
**I-10121 Torino (IT)**

(56) References cited:
EP-A- 0 168 578      EP-A- 0 384 512
EP-A- 0 465 346      WO-A-89/06840
DE-A- 1 936 932      DE-A- 3 043 004
FR-A- 1 333 277      FR-A- 2 257 477
GB-A-   949 327      GB-A- 1 033 587
GB-A- 1 367 340      US-A- 2 957 433

- **RAILWAY GAZETTE INTERNATIONAL vol. 148,
no. 9, September 1992, SUTTON SURREY G.B.
page 586 , XP296415 HONDIUS "axles
abandoned to accomodate low floor"**
- **REVUE GENERALE DES CHEMINS DE FER no. 9,
September 1991, PARIS pages 33 - 35 , XP243770
DOIREAU ET AL. "transmission hydrostatique
intégrale"**

## Description

The present invention relates to a motorized bogie for a rail vehicle, in particular for a tramway vehicle, including four wheels mounted for rotation and connected to a chassis onto which is pivoted at least one body of the vehicle, by means of a vertical-axis pivot. In prior art bogies of this type at least one pair of wheels belonging to the same axle may be driven by a single electric motor, which delivers drive to the said wheels by means of a suitable transmission.

A bogie of the type briefly described has some disadvantages when the vehicle is moving on a curved path.

In fact, under the force of contact between the wheels and the track, each axle of the bogie tends to be displaced in the direction of the radius of the curve to only a very limited extent and this only after the wheels slip repeatedly with respect to the track.

This means that while the bogie is following the said path, the instantaneous direction of its progress corresponds only approximately to the theoretical direction defined by the geometric configuration of the tracks. Furthermore, the contact between wheel and track generates high stress which overloads the wheels and the parts of the bogie. Finally, the wheels wear significantly, as a result of the said slippage which occurs between contact surfaces generating high tangential forces.

The object of the present invention is to provide a motorized bogie for a rail vehicle of the type briefly described in which the above described disadvantages can be overcome.

This object is achieved by a bogie for a rail vehicle which includes four wheels mounted for rotation on a chassis onto which is pivoted at least one body of the vehicle by means of a vertical-axis pivot, characterised in that it includes:

four electric motors, each of which is provided to drive one of the said wheels and to deliver to it a torque which may vary within a predetermined range; and

means to vary the torque delivered by at least one of the motors relative to those delivered by the other motors when the bogie is running on a curved path.

In order better to understand the structure of the bogie according to the invention, there now follows by way of example a more detailed description with reference to the appended drawings, in which:

Figure 1 is a schematic perspective view of a bogie corresponding to a first embodiment of the invention;

Figure 2 is a schematic plan of the embodiment of the bogie shown in Figure 1;

Figure 3 is a schematic plan of a bogie corresponding to a second embodiment of the invention;

Figure 4 is a plan view of the bogie of Figures 1 and 2 showing the forces and couples exchanged between wheels and tracks when the bogie travels along a curved path, in the case of equal drive torque on each wheel;

Figure 5 shows the bogie of the preceding Figure but indicates the forces and couples exchanged between wheels and tracks when the bogie travels along a curved path and different drive torques are delivered to each of the four wheels;

Figure 6 shows schematically the deformation of the bogie of Figure 5 produced by the forces and couples shown in the drawing itself;

Figure 7 is a schematic plan view of the bogie of Figure 1 showing a different distribution of forces and couples from that of Figure 5 while the bogie travels along a curved path;

Figure 8 shows schematically the deformation of the bogie of Figure 7 under the effect of the above forces and couples;

Figure 9 is a schematic plan view of a further embodiment of the bogie according to the invention;

Figure 10 schematically illustrates a resilient coupling used in the bogie according to the invention to permit the deformation shown in Figures 6 and 8; and

Figure 11 is a block diagram of the means with which the bogie is provided in order to vary the torque delivered by each electric motor when the bogie travels in a curve.

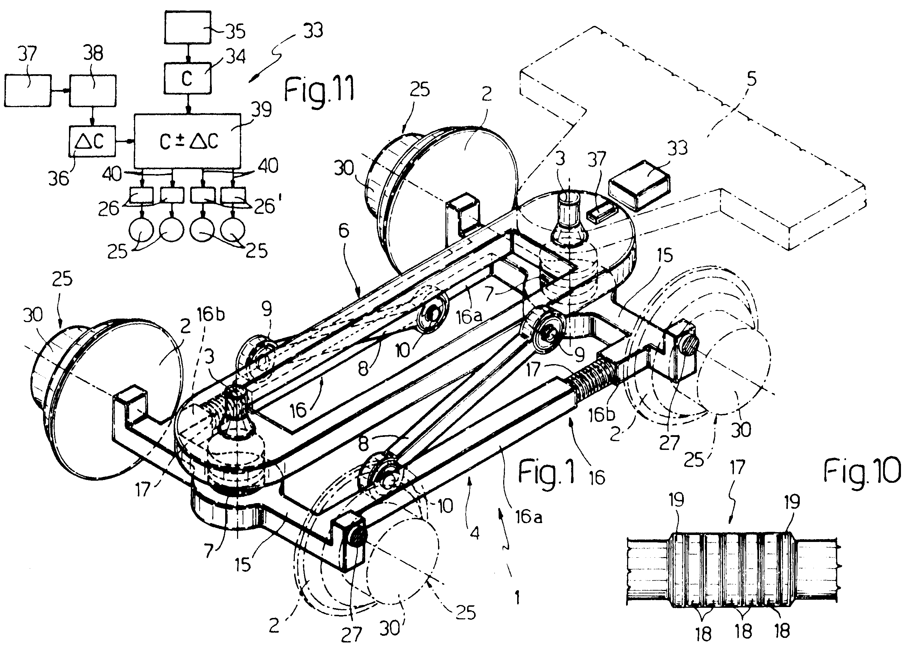

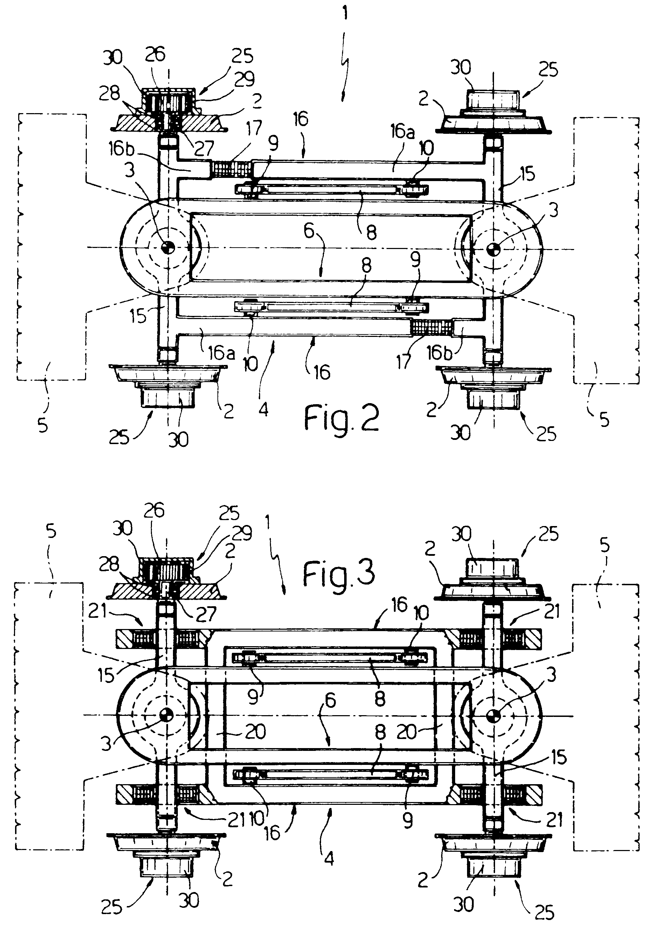

The bogie 1 according to the invention, schematically illustrated in a first embodiment in Figures 1 and 2, substantially includes four wheels 2, mounted for rotation on a chassis 4 onto which is pivoted at least one body 5 of the vehicle by means of a vertical-axis pivot, conveniently, the bogie 4 is a central bogie of a rail vehicle, for example of a tramway vehicle and therefore two bodies 5 are pivoted to it as described above.

The bogie also includes a support structure 6 of any shape, connected to the chassis 4 for example by means of a pair of pneumatic springs 7. In addition, the support structure, to which the pivots 3 and suitable bearings (not shown) are fixed for pivotal connection to the bodies 5, is fixed to the chassis 4 by means of a pair of link rods 8; one end of each of these latter is joined, by a pin 9, to the support structure 6 and the other, by a pin 10, to the chassis 4. Conveniently, blocks of resiliently deformable material (not shown), for example rubber, are interposed between the ends and the pins, in such a way that the coupling between the support structure 6 and the chassis 4 permits vertical movement of the fomer relative to the latter thereby providing efficient resilient suspension for the bodies, and transmits the drag forces between body and bogie smoothly.

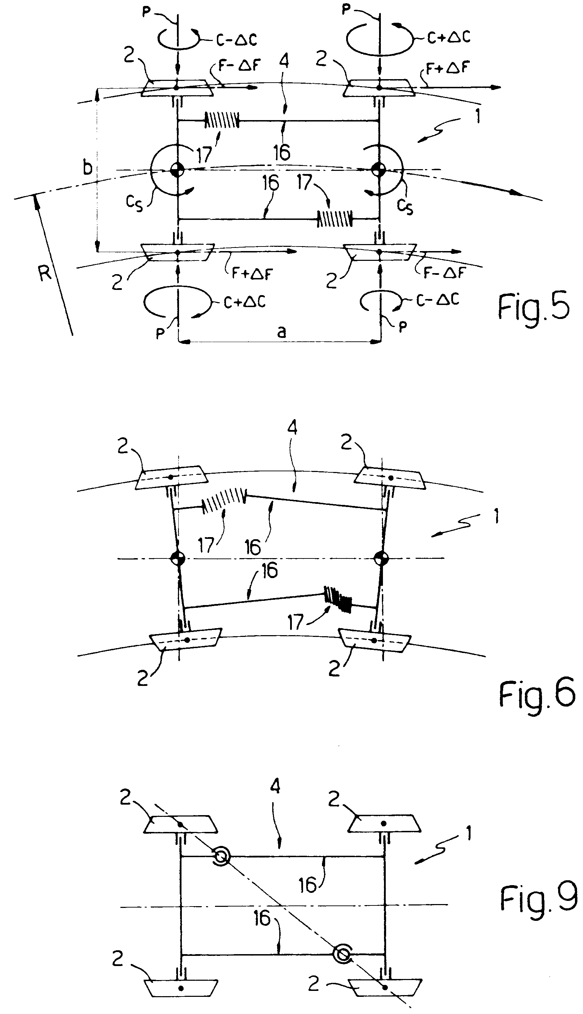

In the embodiment shown in Figures 1 and 2, the bogie 4 includes a pair of beam axles 15 substantially perpendicular to the longitudinal axis of the bogie and connected to each other by longitudinal members 16, each of the latter carrying an interposed ball joint 17. These joints may be ordinary, conventional ball joints, as shown in the embodiment of Figure 9; however, conveniently, they may be elastic permitting relative rotation of the axes of the beam axles 15 in the plane of the axes of the wheels 2: although in Figures 1 and 2 each of these elastic joints is shown as a spring, it may conveniently include a plurality of blocks of resiliently deformable material, for example rubber or an elastomer. One embodiment of this joint is conveniently illustrated in Figure 10, conveniently it may include a plurality of rubber blocks 18 positioned against one another so as to form a stack in which the end blocks are fixed to a pair of flanges 19 which are part of the longitudinal members 16; the intermediate blocks are fixed to each other and the end blocks are fixed to the flanges 19 in known manner, using fixing means of any type.

Conveniently, as is shown in Figures 1 and 2, each of the longitudinal members 16 has one longer section 16a, which is fixed to one of the beam axles 15, and one shorter section 16b, fixed to the other beam axle; one of the joints 17 is interposed between these two sections. In addition, as may be seen clearly in Figure 2, showing a plan view of the bogie, the two joints 17 are positioned substantially along one of the diagonals of a rectangle defined by the two beam axles 15 and the two longitudinal members 16.

In the embodiment of the bogie shown in Figure 3, the two longitudinal members 16 are fixed to each other by rigid means, comprising for example a pair of cross members 20; in addition each end of each longitudinal member 16 is resiliently joined to a beam axle 15 by a resilient coupling 21, which is schematically shown in Figure 3 as a pair of springs positioned symmetrically in relation to a respective beam axle. Each coupling 21 must permit relative movement between a beam axle 15 and the longitudinal members 16, substantially in the plane of Figure 3: therefore, instead of a pair of springs, it may be made up of blocks of resiliently deformable, material, for example rubber or another elastomeric material. The bogie of Figure 3 also has a support structure 6, entirely similar to that of Figure 2, joined to the longitudinal members 16 by pairs of link rods 8, connected in the same way as those of the preceding embodiment.

According to the invention, the bogie includes four electric motors 25, each of which is provided to drive an associated wheel 2 and to deliver to it, in the manner described below, a torque which may be varied within a predetermined range.

Conveniently, each of these motors includes a fixed element 26, connected to an end pin 27 of a beam axle 15 and on which a wheel 2 is mounted for rotation by means of rolling element bearings 28. The rotating element 29 of the motor 25 is fixed to a casing 30 fixed to the wheel 2. Each of the motors 25 may be any electric motor which permits the torque it delivers to be varied by altering a property of the electric current supplied to the motor itself.

The bogie according to the invention also includes means, generally indicated 33 and schematically illustrated in Figure 11, provided to vary the torque delivered by at least one of the motors 25 relative to that delivered by the others when the bogie is on a curved path; such means may be carried by the body 5 and the essential components are indicated in Figure 11.

The said means are arranged so as to alter a property of the electric current supplied to each of the motors 25, so as to vary the torque delivered by at least one motor. In addition, such means are arranged so as to vary the torque delivered by at least one of the motors in proportion to the angle of rotation of the body 5 relative to the bogie 1 about the vertical axis of the pivot 3, which angle is produced when the bogie is travelling around a curve, or immediately upon arrival of the bogie on the said curve.

Such means (Figure 11) conveniently include a signal generator 34 for generating electrical signals representing the drive torque C, which is controlled by signals from a regulator 35 which may be activated by the driver of the vehicle so as to set the speed at which this should move. The means 33 include, in addition, a signal generator 36 for generating electrical signals representing the variations in drive torque $\Delta C$, which receives electrical signals from a rotation sensor 37 adapted to detect the angle of rotation between the bogie and the body 5; between this rotation sensor and the signal generator 36 is conveniently interposed a threshold comparator 38, adapted to permit the signals detected by the sensor 37 to pass only when these are above a predetermined threshold value. The means 33 also include a microprocessor 39 which receives the signals representing the torque C emitted by the generator 34 and the signals representing the variations of torque $\Delta C$ emitted by the generator 36. This microprocessor substantially includes a computing unit preset to work out the algebraic sum of the torque signal C and the torque variation signal $\Delta C$. This microprocessor is provided with four outputs 40, each of which sends signals to a respective electric motor 25 through power control circuits 26'. The microprocessor 39 is preset so as to supply through each of the outputs 40 a signal representing the torque $C+\Delta C$ or $C-\Delta C$; in addition the microprocessor is arranged so as to obtain a desired combination of the signals $C + \Delta C$ and $C - \Delta C$ at the four outputs 40.

Obviously, the selected torque variations $\Delta C$ may be any desired value (and may even be different on the four wheels) and, in the same way, the combinations of the signals $C+\Delta C$ and $C-\Delta C$ obtained at the four outputs 40 may be selected from among all possible combinations; of these, the two indicated in Figures 5 and 7 are of special interest. For this reason, the following description will refer by way of example to these two combinations seen as of greater interest, though it is clear that any other combination falls within the scope of the present invention.

According to the combination of Figure 5, the microprocessor 39 is set so as to increase by torque variation $\Delta C$ the drive torque delivered by the motors 25 that drive the front outside wheel and the rear inside wheel (throughout this specification, outside wheel refers to a wheel radially outward of a particular curve, while inside wheel refers to a wheel radially inward of the same curve) and to decrease, by the same torque variation ΔC, the drive torque delivered by the motors driving the rear outside wheel and the front inside wheel.

According to the combination shown in Figure 7, the microprocessor is set so as to increase by torque variation ΔC the drive torque C delivered by the motors driving the outside wheels on a particular path and to decrease, by the same torque variation ΔC, the torque C delivered by the motors driving the inside wheels.

The bogie as described behaves as follows on a curve.

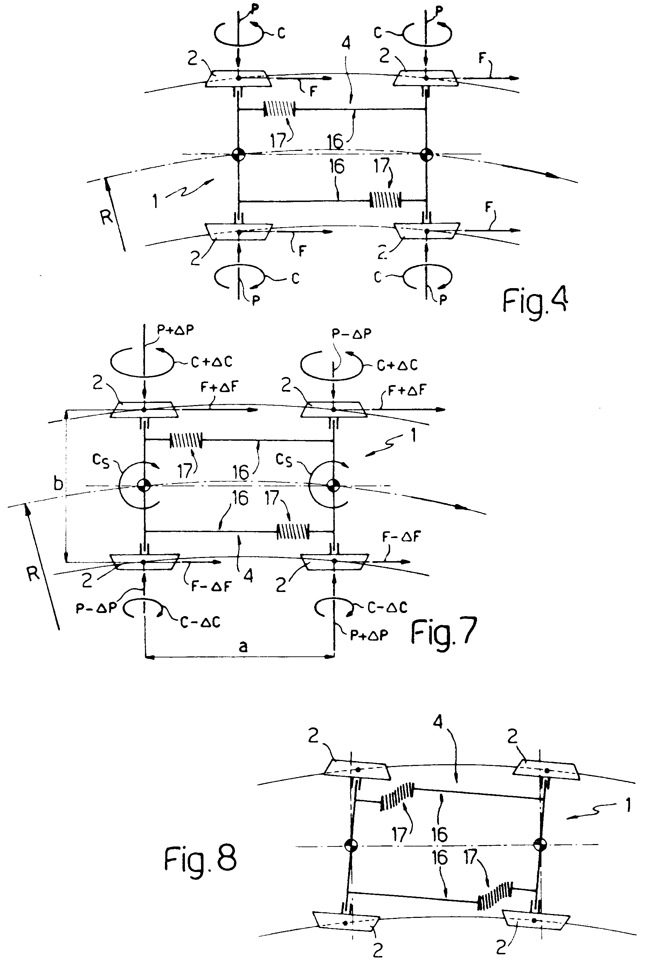

First, suppose the bogie is moving along a curved path, as shown schematically in Figure 4, and the said means 33 for varying the torque delivered by the motors 25 are not activated. Under such conditions, each motor 25 delivers, to a respective wheel 2, a drive torque C which corresponds to a tangential force F between wheel and track, equal to $F = C/r$, r being the radius of the wheel. The bogie tends to position itself with its median transverse axis substantially in the direction of the radius of the curve; in this configuration of the bogie (that is with the median transverse axis inclined along the radius of the curve), each axle forms with the radius of the curve intersecting its mid point an angle (angle of attack) approximately equal to a/2R, where a is the distance between the bogie axles and R is the radius of the curve. Consequent transverse slippage generates tangential forces exchanged between each wheel and the associated track, the resultant P of which, to a first approximation, has a direction coincident with the axes of the wheels, as shown in Figure 4.

When, on the other hand, the means 33 for varying the torque delivered by the motors 25 are activated, and when the microprocessor 39 is set to achieve the combination of signals at the outputs 40 shown in Figure 7, the forces exchanged between each wheel and the track are as shown in this figure;in particular the tangential traction forces F become, for the front outside wheel and the rear inside wheel:

$$F + \Delta F = \frac{1}{r} (C + \Delta C)$$

and for the front inside wheel and rear outside wheel:

$$F - \Delta F = \frac{1}{r} (C - \Delta C)$$

Therefore, if b is the distance between the median planes of the wheels 2, a torque $C_S$ equal to

$$C_S = b\Delta F = \frac{b}{r} \Delta C$$

on each front and rear beam axle 15.

As may be seen clearly in Figure 5, the torque $C_S$ acting on the front beam axle tends to rotate this anticlockwise; such rotations are made possible by the presence of the elastic couplings 17. The resulting deformation is shown in Figure 6: from this we can see that the said beam axles have rotated from the initial configuration and tend to position themselves with their axes coinciding with a radius of the curve, eliminating the attck angles (equal to a/2R) and as a result the tangential slippage forces P.

If the microprocessor 39 is set produce at its outputs 40 a combination of signals corresponding to Figure 7, the forces exchanged between each wheel and the track are those indicated in the Figure. In particular, a clockwise torque $C_S$, expressed as above, acts on both beam axles. Therefore a torque equal to $2 C_S$ acts on the bogie and to balance the said torque the uniform distribution of the forces P shown in the diagram of Figure 4 is modified, as shown in Figure 7; in particular, the value of the transverse wheel-track forces exchanged by the front outside and rear inside wheels is reduced, becoming:

$$P - \Delta P = P - \frac{2Cs}{a} = P - \frac{2b}{ra} \Delta C$$

while at the same time the value of the transverse wheel-track forces exchanged by the front inside and rear outside wheels increases, the value of this is:

$$P + \Delta P = P + \frac{2Cs}{a} = P + \frac{2b}{ra} \Delta C$$

If the chassis is deformable, as shown in Figure 7, the two beam axles 15 tend under the effect of the torques Cs to rotate in the same direction, positioning themselves as shown in Figure 8 and thereby reducing the angle of attck a/2R.

It has been found that this configuration of the bogie is advantageous to steering because, along with the angle of attack, the axial force exchanged between the front outside wheel and the track is also markedly reduced, reducing from the initial value P (Figure 4) to the value P-ΔP. This reduction in axial force reduces stress and therefore inproves the operating coefficient of safety; in addition whenever the bogie adopts the position of Figure 8, the angle of attack, that is the angle between the median plane of the front outside wheel and the tangent to the associated track, is reduced, thus improving the steerability of the bogie.

As may be seen clearly from the deformed configurations of Figures 6 and 8, the free ends of the longitudinal members 16a and 16b substantially tend to move longitudinally and transversely relative to each other: this type of movement is permitted by the resilient joints 17, whether these include true springs or whether they are composed of a plurality of blocks 18 as illustrated in Figure 10.

If the structure of the bogie should correspond to that shown in Figure 9, that is with each joint 17 composed simply of a ball joint with no interposed resilient elements and the chassis is substantially undeformable horizontally, the means 33 for varying the torque delivered by at least one of the motors 25 may be set so that a combination of signals for controlling the motors as Figure 7 is produced at the outputs 40 of the microprocessor. In this case, the beam axles 15 of the bogie of Figure 9 will no longer rotate under the action of the torques Cs owing to the considerable rigidity of the structure formed by the longitudinal members 16 and the joints 17; however the distribution of forces exchanged between wheel and track is especially favorable for steering the bogie along a curved path. In fact, as described earlier, the axial force exchanged between the front outside wheel and the track is reduced (from P to P-ΔP) thereby reducing stress and wear in this area. In the bogie of Figure 9, the fundamental purpose of the joints 17 is therefore to permit a correct distribution of the vertical forces exchanged between wheels and tracks, so as to achieve, with good approximation, the distribution of forces illustrated in Figure 7.

It is clear that the embodiments described here may be altered and modified, both in their shape and in the arrangement of their parts, without departing from the scope of the invention. In particular, different combinations of signals from those described with reference to Figures 5 and 7 may be produced at the outputs 40 of the microprocessor 39 of the means 33, so as to alter the torque delivered by at least one of the motors relative to the torques delivered by the other motors when the bogie is driven along a curved path.

**Claims**

1. A bogie for a rail vehicle including four wheels (2) mounted for rotation on a chassis (4) onto which at least one body (5) of the vehicle is pivoted by a vertical-axis pivot (3), characterised in that it includes:
    four electric motors (25), each of which is operable to drive one of the wheels (2) and to deliver to it a torque which may be varied within a predetermined range of values; and
    means (33) for varying the torque delivered by at least one of the said motors relative to those delivered by the others, when the bogie is travelling along a curved path.

2. A bogie according to Claim 1, characterised in that the said means (33) are arranged to vary a property of the electric current delivered to the motors (25) in order to vary the torque delivered by at least one of the said motors.

3. A bogie according to Claim 1 or Claim 2, characterised in that the said means (33) for varying the torque delivered by at least one of the said motors (25) varies the said torque in proportion to the angle of rotation of the body relative to the bogie about the vertical axis, formed when the bogie is on a curve and/or before the bogie is on this curve.

4. A bogie according to any one of the preceding Claims, characterised in that the means (33) for varying the torque C delivered by at least one of the motors (25) are arranged so as to increase, by a predetermined torque variation ΔC, the drive torque C delivered by the motors controlling the front outside wheel and the rear inside wheel, as soon as the bogie is on the said curved path, so as to decrease, by a predetermined torque variation ΔC, the drive torque delivered by the motors controlling the rear outside wheel and the front inside wheel as soon as the bogie is on the said curved path.

5. A bogie according to Claim 2 or Claim 3, characterised in that the means for varying the torque delivered by the said motors (25) are arranged so as to increase, by a predetermined torque variation ΔC, the torque C delivered by the motors controlling the outside wheels as soon as the bogie is on a curved path, and are arranged so as to decrease, by the said predetermined torque variation ΔC, the torque delivered by the motors controlling the inside wheels on the said curve, as soon as the bogie is on the said curve.

6. A bogie according to any preceding claim, characterised in that it includes a pair of beam axles (15) substantially perpendicular to the longitudinal axis of the bogie and joined to each other by longitudinal members (16), to each end of each of the said beam axles (15) there being secured a fixed element (26) of one of the electric motors (25), with the rotating element (29) of the said motor being secured to an associated wheel (2) rotatable via interposed bearings (28) on a seating (27) on the said end.

7. A bogie according to Claim 6, characterised in that the beam axles (15) are joined to the longitudinal members (16) by at least one pair of ball joints (17) which permit the free torsional deformability of the bogie.

8. A bogie according to Claim 7, characterised in that the ball joints (17) are resilient couplings, which permit the axes of the beam axles (15) to turn relative to each other in the horizontal plane.

9. A bogie according to Claim 8, characterised in that the resilient couplings (17) include a plurality of elements (18) of resiliently deformable material.

10. A bogie according to any of Claims from 6 to 9, characterised in that each of the longitudinal members (16) has a first section (16a) fixed to one of the beam axles (15) and a second section (16b) fixed to the other beam axle, with one of the ball joints (17) interposed between the ends of the two sections.

11. A bogie according to Claim 10, characterised in that the first section (16a) and the second section (16b) are of different length, and each of the beam axles (15) has sections of a different length fixed to it.

12. A bogie according to any of Claims from 1 to 6, characterised in that the longitudinal members (16) are connected to each other by rigid elements (20), with each beam axle (15) resiliently secured to an end of each of the longitudinal members (16) by a resilient coupling (21).

13. A bogie according to any of Claims from 6 to 12, characterised in that it includes a support structure (6) for the bodies (5), connected to the beam axles (15) and to the longitudinal members (16) by resilient suspension means (7), the said support structure having at least one of the said vertical-axis pivots (3) for the articulated attachment of one of the bodies (5).

14. A bogie according to Claim 13, characterised in that the support structure (6) is joined to the longitudinal members (16) by means of pairs of link rods (8), each of which has one end pivotally attached to the support structure (6) and the other end pivotally attached to one of the longitudinal memebers (16).

15. A bogie according to any one of the preceding Claims, characterised in that the said means (33) for varying the torque delivered by at least one of the motors include:

a sensor (37) able to detect the absolute value and sign of the said angle of rotation of the body (5) relative to the bogie (1) about the vertical axis, and to generate a first electrical signal;

a second-signal generator (36) for generating second electrical signals representing the said torque variation $\Delta C$ operable to generate the said second signals proportional to the first signals;

a threshold comparator (38) permitting the delivery of the said first signals to the said second-signal generator (36) only when the said first signals exceed a predetermined value;

a microprocessor (39) operable to receive a third electrical signal representing the drive torque C and to receive the said second signals representing the said torque variation $\Delta C$, the said microprocessor (39) having a computing unit operable to calculate the algebraic sum of the said second and third electrical signals respectively representing the said drive torque C and the said torque variation $\Delta C$, and to combine these signals according to a predetermined strategy and send them to power control circuits (26) of each of the electric motors (25).

16. A bogie according to Claim 15, characterised in that it includes a third-signal generator (34) for generating the said third electrical signal representing the drive torque C, which generator is controlled by electrical signals from a conroller (35) operated by the driver of the vehicle.

**Patentansprüche**

1. Drehgestell für ein Schienenfahrzeug, welches vier auf einem Rahmen (4) drehbar gelagerte Räder (2) beinhaltet, auf dem mindestens ein Fahrzeugaufbau (5) über eine senkrechte Drehachse drehbar gelagert ist, dadurch gekennzeichnet, daß es umfaßt:

Vier Elektromotoren (25), wobei jeder betriebsfähig ist, eines der Räder (2) anzutreiben und auf dieses ein Drehmoment auszuüben, das innerhalb eines vorbestimmten Wertebereichs verändert werden kann; und

Mittel (33) zur Veränderung des durch mindestens einen der genannten Motoren hervorgerufenen Drehmoments in bezug auf jene, welche durch die anderen Motoren hervorgerufen werden, während das Drehgestell entlang einer Kurve fährt.

2. Drehgestell gemäß Anspruch 1, dadurch gekennzeichnet, daß die Mittel (33) so angeordnet sind, daß ein Parameter des elektrischen Stroms, mit dem die Motoren (25) versorgt werden, verändert werden kann, um das Drehmoment, welches von mindestens einem der genannten Motoren ausgeübt wird, zu verändern.

3. Drehgestell gemäß Anspruch 1 oder 2, dadurch gekennzeichnet, daß die Mittel (33) zur Veränderung des von mindestens einem der Motoren (25) ausgeübten Drehmoments, das Drehmoment entsprechend dem Drehwinkel des Aufbaus in bezug auf das Drehgestell um die vertikale Achse der Drehachse verändern, wenn das Drehgestell entlang einer Kurve fährt und/oder bevor das Drehgestell auf dieser Kurve ist.

4. Drehgestell entsprechend einem der vorangegangenen Ansprüche, dadurch gekennzeichnet, daß die Mittel (33) zur Veränderung des von mindestens einem der Motoren (25) ausgeübten Drehmoments C, so angeordnet sind, daß das Antriebsdrehmoment C, welches von den, das vordere äußere Rad und das hintere innere Rad antreibenden Motoren ausgeübt wird, um eine vorbestimmte Drehmomentsveränderung $\Delta C$ erhöht wird, sobald das Drehgestell auf der Kurve ist und daß das Antriebsdrehmoment, welches von den, das hintere äußere Rad und das vordere innere Rad antreibenden Motoren ausgeübt wird, um eine vorbestimmte Drehmomentsveränderung $\Delta C$ verringert wird, sobald das Drehgestell auf der Kurve ist.

5. Drehgestell gemäß Anspruch 2 oder 3, dadurch gekennzeichnet, daß die Mittel zur Veränderung des von den Motoren (25) ausgeübten Drehmoments so angeordnet sind, daß das Drehmoment C, welches von den, die äußeren Räder antreibenden Motoren ausgeübt wird, um eine vorbestimmte Drehmomentsveränderung $\Delta C$ erhöht wird, sobald sich das Drehgestell auf der Kurve befindet und daß jenes Drehmoment, welches von den, die inneren Räder in bezug auf die Kurve antreibenden Motoren ausgeübt wird, um die selbe vorbestimmte Drehmomentsänderung ΔC verringert wird, sobald sich das Drehgestell auf dieser Kurve befindet.

6. Drehgestell gemäß einem der vorangegangenen Ansprüche, dadurch gekennzeichnet, daß das Drehgestell ein Paar Querachsen (15) im wesentlichen senkrecht zur Längsachse des Drehgestells beinhaltet, die miteinander über Längsbauteile (16) verbunden sind, wobei an jedem Ende von jedem dieser Querachsen (15) ein festes Element (26) eines der Elektromotoren (25) befestigt ist, und an diesem Ende das drehende Element (29) des Motors mit dem in Verbindung stehenden Rad (2) über dazwischenliegende Lager (28) auf einer Lagerung (27) befestigt ist.

7. Drehgestell gemäß Anspruch 6, dadurch gekennzeichnet, daß die Querachsen (15) mit den Längsbauteilen (16) durch mindestens ein Paar Kugellagerverbindungen (17) verbunden sind, die eine freie Drehverformbarkeit des Drehgestells erlauben.

8. Drehgestell gemäß Anspruch 7, dadurch gekennzeichnet, daß die Kugellagerverbindungen (17) elastische Kupplungen sind, die eine Drehung der Achsen der Querachsen (15) relativ zueinander in der Horizontalebene zulassen.

9. Drehgestell gemäß Anspruch 8, dadurch gekennzeichnet, daß die elastischen Kupplungen (17) eine Vielzahl von Elementen (18) aus elastisch verformbarem Material beinhalten.

10. Drehgestell gemäß einem der Ansprüche 6 bis 9, dadurch gekennzeichnet, daß jeder Längsbauteil (16) einen ersten Abschnitt (16a), der mit einer Querachse (15) verbunden ist, und einem zweiten Abschnitt (16b), der mit dem anderen Querträger verbunden ist, aufweist, wobei eine der Kugellagerverbindungen (17) zwischen den Enden der zwei Abschnitte zwischengeschaltet ist.

11. Drehgestell gemäß Anspruch 10, dadurch gekennzeichnet, daß der erste Abschnitt (16a) und der zweite Abschnitt (16b) verschiedene Länge aufweisen und jede der Querachsen (15) an Abschnitten unterschiedlicher Länge befestigt ist.

12. Drehgestell gemäß einem der Ansprüche 1 bis 6, dadurch gekennzeichnet, daß die Längsbauteile (16) über starre Elemente (20) miteinander verbunden sind und jeder Querträger (15) über eine elastische Kupplung (21) mit einem Ende jedes Längsbauteiles (16) verbunden ist.

13. Drehgestell gemäß einem der Ansprüche 6 bis 12, dadurch gekennzeichnet, daß das Drehgestell eine Tragkonstruktion (6) für den Aufbau (5) beinhaltet, die über elastische Pendel (7) mit den Querachsen (15) und den Längsbauteilen (16) verbunden sind, und die Tragkonstruktion mindestens eine der senkrechten Drehachsen (3) zur drehbaren Lagerung einer der Aufbauten (5) besitzt.

14. Drehgestell gemäß Anspruch 13, dadurch gekennzeichnet, daß die Tragkonstruktion (6) über Paare von Lenkern (8), mit den Längsbauteilen (16) verbunden ist, und jeder dieser Lenker mit einem Ende an der Tragkonstruktion (6) drehbar gelagert ist und mit dem anderen Ende an einem der Längsbauteile (16) drehbar gelagert ist.

15. Drehgestell gemäß einem der vorangegangenen Ansprüche, dadurch gekennzeichnet, daß die Mittel (33) zur Veränderung des von mindestens einem der Motoren ausgeübten Drehmoments, beinhalten:

   - einen Sensor (37), der den absoluten Wert und das Vorzeichen des Drehwinkels des Aufbaus (5) in bezug auf das Drehgestell (1) um die vertikale Achse feststellen kann und ein erstes elektrisches Signal erzeugt;
   - einen zweiter Signalgenerator (36) zur Erzeugung eines zweiten elektrischen Signals entsprechend der Drehmomentsveränderung ΔC, wobei diese zweiten Signale proportional zu den ersten Signalen erzeugt werden können;
   - einen Schwellwertkomparator (38), der die ersten Signale zum zweiten Signalgenerator (36) nur dann durchläßt, wenn die ersten Signale einen vorbestimmten Wert übersteigen;
   - einen Mikroprozessor (39), der ein drittes elektrisches Signal entsprechend dem Antriebsdrehmoment C empfangen kann und die zweiten Signale entsprechend der Drehmomentsveränderung ΔC empfängt, wobei der Mikroprozessor (39) eine Recheneinheit beinhaltet, die die algebraische Summe dieser zweiten und dritten elektrischen Signale bzw. die des Antriebsdrehmoments C und der Drehmomentsveränderung ΔC berechnen kann und diese Signale gemäß einer vorbestimmten Strategie kombinieren und zu Schaltkreisen zu Leistungsregelung (26) jedes der elektrischen Motoren (25) übertragen kann.

16. Drehgestell gemäß Anspruch 15, dadurch gekennzeichnet, daß ein dritter Signalgenerator (34) zur Erzeugung eines dritten elektrischen Signals entsprechend dem Antriebsdrehmoment C vorgesehen ist, der über die elektrischen Signale eines vom Fahrzeuglenker bedienten Reglers (35) gesteuert wird.

## Revendications

1. Bogie pour un véhicule ferroviaire comprenant quatre roues (2) montées pour tourner sur un châssis (4) sur lequel au moins une caisse (5) du véhicule pivote à l'aide d'un pivot (3) à axe vertical, caractérisé en ce qu'il comprend :

   quatre moteurs électriques (25), dont chacun peut être mis en oeuvre pour entraîner l'une des roues (2) et pour lui délivrer un couple que l'on peut faire varier dans les limites d'une plage prédéterminée de valeurs, et

   des moyens (33) permettant de faire varier le couple délivré par au moins l'un desdits moteurs par rapport à ceux délivrés par les autres moteurs, lorsque le bogie circule sur une voie en courbe.

2. Bogie selon la revendication 1, caractérisé en ce que lesdits moyens (33) sont conçus pour faire varier une caractéristique du courant électrique fourni aux moteurs (25) afin de faire varier le couple délivré par au moins l'un desdits moteurs.

3. Bogie selon la revendication 1 ou la revendication 2, caractérisé en ce que lesdits moyens (33) permettant de faire varier le couple délivré par au moins l'un desdits moteurs (25) fait varier ledit couple en proportion de l'angle de rotation de la caisse par rapport au bogie autour de l'axe vertical, formé lorsque le bogie se trouve sur une courbe et/ou avant que le bogie soit dans cette courbe.

4. Bogie selon l'une quelconque des revendications précédentes, caractérisé en ce que les moyens (33) permettant de faire varier le couple C délivré par au moins l'un des moteurs (25) sont conçus de façon à augmenter, d'une variation de couple prédéterminée $\Delta C$, le couple d'entraînement C délivré par les moteurs commandant la roue extérieure avant et la roue intérieure arrière, dès que le bogie est sur ladite voie en courbe, et de façon à diminuer, d'une variation de couple prédéterminée $\Delta C$, le couple d'entraînement délivré par les moteurs commandant la roue extérieure arrière et la roue intérieure avant dès que le bogie est sur ladite voie en courbe.

5. Bogie selon la revendication 2 ou la revendication 3, caractérisé en ce que les moyens permettant de faire varier le couple délivré par lesdits moteurs (25) sont conçus de façon à augmenter, d'une variation de couple prédéterminée $\Delta C$, le couple C délivré par les moteurs commandant les roues extérieures dès que le bogie est sur une voie en courbe, et sont conçus de façon à diminuer, de ladite variation de couple prédéterminée $\Delta C$, le couple délivré par les moteurs commandant les roues intérieures dans ladite courbe, dès que le bogie se trouve sur ladite courbe.

6. Bogie selon l'une quelconque des revendications précédentes, caractérisé en ce qu'il comprend une paire d'essieux ponts (15) sensiblement perpendiculaires à l'axe longitudinal du bogie et joints l'un à l'autre par des longerons (16), à chaque extrémité de chacun desdits essieux ponts étant fixé un élément fixe (26) de l'un des moteurs électriques (25), l'élément tournant (29) dudit moteur étant fixé à une roue (2) associée pouvant tourner par l'intermédiaire de paliers intercalés (28) sur un siège (27) de ladite extrémité.

7. Bogie selon la revendication 6, caractérisé en ce que les essieux ponts (15) sont réunis aux longerons (16) par au moins une paire de joints à rotule (17) qui permettent la libre déformation en torsion du bogie.

8. Bogie selon la revendication 8, caractérisé en ce que les joints à rotule (17) sont des accouplements élastiques, qui permettent aux axes des essieux ponts (15) de tourner l'un par rapport à l'autre dans le plan horizontal.

9. Bogie selon la revendication 8, caractérisé en ce que les accouplements élastiques (17) comprennent une pluralité d'éléments (18) de matériau élastiquement déformable.

10. Bogie selon l'une quelconque des revendications 6 à 9, caractérisé en ce que chacun des longerons (16) comporte une première section (16a) fixée à l'un des essieux ponts (15) et une seconde section (16b) fixée à l'autre essieu pont, l'un des joints à rotule (17) étant intercalé entre les extrémités des deux sections.

11. Bogie selon la revendication 10, caractérisé en ce que la première section (16a) et la seconde section (16b) sont de longueur différente, et en ce que chacun des essieux ponts (15) comporte des sections de longueur différente qui lui sont fixées.

12. Bogie selon l'une quelconque des revendications 1 à 6, caractérisé en ce que les longerons (16) sont reliés l'un à l'autre par des éléments rigides (20), chaque essieu pont (15) étant fixé élastiquement à une extrémité de chacun des longerons (16) par un accouplement élastique (21).

13. Bogie selon l'une quelconque des revendications 6 à 12, caractérisé en ce qu'il comprend une structure de support (6) pour les caisses (5), reliée aux essieux ponts (15) et aux longerons (16) par des moyens de suspension élastique (7), ladite structure de support comportant au moins l'un desdits pivots à axe vertical (3) pour la fixation articulée de l'une des caisses (5).

**14.** Bogie selon la revendication 13, caractérisé en ce que la structure de support (6) est réunie aux longerons (16) au moyen d'une paire de bielles d'accouplement (8), dont chacune a une première extrémité fixée avec faculté de pivotement à la structure de support (6) et l'autre extrémité fixée avec faculté de pivotement à l'un des longerons (16).

**15.** Bogie selon l'une quelconque des revendications précédentes, caractérisé en ce que lesdits moyens (33) permettant de faire varier le couple délivré par au moins l'un des moteurs comprennent :

un capteur (37) apte à détecter la valeur absolue et le signe dudit angle de rotation de la caisse (5) par rapport au bogie (1) autour de l'axe vertical, et à générer un premier signal électrique,

un générateur de seconds signaux (36) destiné à générer des seconds signaux électriques représentant ladite variation de couple $\Delta C$ pouvant être mis en oeuvre pour générer lesdits seconds signaux proportionnels aux premiers signaux,

un comparateur à seuil (38) permettant la fourniture desdits premiers signaux audit générateur de seconds signaux (36) uniquement lorsque lesdits premiers signaux dépassent une valeur prédéterminée,

un microprocesseur (39) pouvant être mis en oeuvre pour recevoir un troisième signal électrique représentant le couple d'entraînement C et pour recevoir lesdits seconds signaux représentant ladite variation de couple $\Delta C$, ledit microprocesseur (39) comportant une unité de calcul pouvant être mise en oeuvre pour calculer la somme algébrique desdits seconds et troisième signaux électriques représentant respectivement ledit couple d'entraînement C et ladite variation de couple $\Delta C$, et pour combiner ces signaux en fonction d'une stratégie prédéterminée et les envoyer à des circuits de commande de puissance (26) de chacun des moteurs électriques (25).

**16.** Bogie selon la revendication 15, caractérisé en ce qu'il comprend un générateur de troisième signal (34) destiné à générer ledit troisième signal électrique représentant le couple d'entraînement C, générateur qui est commandé par les signaux électriques provenant d'un régulateur (35) actionné par le conducteur du véhicule.

Fig.10

Fig.1

Fig.11

Fig. 2

Fig. 3

Fig.4

Fig.7

Fig.8

Fig.5

Fig.6

Fig.9

13